# FASCICULE DE BREVET EUROPEEN

(11) **EP 0 541 442 B1**
(45) Date de publication et mention de la délivrance du brevet: **26.03.1997**
(21) Numéro de dépôt: 92402990.3
(22) Date de dépôt: 05.11.1992
(51) Int. Cl.: C01B 39/00, B01J 29/06, B01J 29/04, B01J 20/18

(54) **Procédé de synthèse d'une zéolithe de type MTT, produits obtenus et leur application en adsorption et catalyse**
Verfahren zur Herstellung eines Zeoliths vom MTT-Typ, danach hergestellte Produkte und deren Anwendung in der Adsorption und Katalyse
Process for the synthesis of a MTT-type zeolite, products obtained and use thereof in adsorption and catalysis

(30) Priorité: 08.11.1991 FR 9113816
(43) Date de publication de la demande: 12.05.1993
(73) Titulaire: ELF AQUITAINE, 92400 Courbevoie (FR)
(72) Inventeur: Di Renzo, Francesco, F-34080 Montpellier (FR); Fajula, François, F-34100 Montpellier (FR); des Courières, Thierry, F-69007 Lyon (FR); Anglerot, Didier, F-64140 Lons (FR)
(74) Mandataire: Boillot, Marc

(56) Documents cités:
- EP-A- 0 087 017
- EP-A- 0 220 893
- FR-A- 2 325 603
- GB-A- 2 071 632
- NL-A- 8 603 170

## Description

Cette invention concerne un procédé de synthèse d'une zéolithe du type MTT, la zéolithe obtenue et son utilisation en tant que catalyseur et adsorbant organophile sélectif.

La structure de la zéolithe MTT a été résolue en 1985 par Rohrman et collaborateurs (zéolites, 5, 352, 1985) et Wright et collaborateurs (J.C.S. Chem. Commun. 1117, 1985). C'est une zéolithe de symétrie orthorhombique (a=2,15nm, b=1,11nm et c=0,50nm) possédant des canaux 0,52x0,45nm parallèles à l'axe c délimités par des cycles à dix tétraèdres. Dans les deux autres directions cristallographiques la zéolithe présente un réseau très dense de cycles à six tétraèdres. Ces caractéristiques structurales confèrent aux zéolithes de type MTT une porosité unidirectionnelle et une excellente stabilité de la charpente.

Les zéolithes dont la structure correspond au type MTT connues à ce jour sont la ZSM-23, la EU-13, la ISI-4 et la KZ-1 (Meier et Olson, Atlas of zéolite Structure Types, Butterworth, 1987). Ce sont des solides intéressants pour la transformation catalytique d'hydrocarbures et de composés organiques et pour l'adsorption.

La synthèse de zéolithes de type MTT est décrite dans plusieurs brevets résumés dans le tableau I. Elle est également décrite dans la littérature scientifique par Parker et Bibby (zéolites, 3, 8, 1983), Ernst et Coll. (Catal.Today, 3, 1, 1988) et Zones (Zéolites, 9, 458, 1989).

**TABLEAU I**

| N° brevet | Société déposante | Année priorité | zéolite obtenue | Structurant |
|---|---|---|---|---|
| FR 2313980 | MOBIL | 1975 | ZSM 23 | Pyrrolidine |
| EP 108486-B | ICI | 1982 | EU 13 | Ammonium ou phosphonium |
| EP 125078-B | MOBIL | 1983 | ZSM 23 | heptane-1,7-bis-triméthyl-ammonium |
| EP 178846-A | MOBIL | 1983 | ZSM 23 | heptane-1,7-bis-triméthyl-ammonium |
| EP 220893-A | MOBIL | 1985 | ZSM 23 | Pyrrolidine |
| GB 2190910-B | BP | 1986 | ZSM 23 | diisopropanolamine |
| GB 2202838-B | ICI | 1986 | ZSM 23 | octane-1,8-bis-triméthyl-ammonium |
| EP 102497-B | Res. Asso. Petrol. | 1982 | ISI 4 | ethylèneglycol ou monoéthanolamine |

Les zéolithes de type MTT sont préparées par cristallisation hydrothermique de gels alcalins réactifs d'aluminosilicates. Les synthèses sont effectuées en présence d'un agent organique azoté tel que la pyrrolidine, des alkyl ammoniums tertiaires et quaternaires ou la diisopropanolamine. Dans le brevet EP 102 497-B, l'agent organique utilisé est la monoéthanolamine ou l'éthylèneglycol.

A l'issue de la synthèse, l'agent organique se retrouve piégé dans la porosité de la zéolithe et son élimination, nécessaire pour libérer le volume microporeux de la zéolithe, s'effectue par une calcination oxydante à une température généralement supérieure à 500°C. Cette étape de calcination présente un certain nombre d'inconvénients car, en plus de son coût énergétique, elle peut entraîner une dégradation de la structure cristalline et elle s'accompagne d'un dégagement d'oxydes d'azote qu'il est impératif de traiter pour des raisons d'environnement. De plus, le coût des synthèses est accru car l'agent organique est généralement le composant le plus cher du mélange réactionnel.

On a maintenant trouvé un procédé de synthèse d'une zéolithe de type MTT qui ne met pas en oeuvre d'agent organique azoté.

Le précurseur de la zéolithe peut être transformé en zéolithe sans calcination par un traitement thermique modéré. Ce traitement n'entraîne pas de dégradation de la structure cristalline. La zéolithe obtenue présente une remarquable stabilité thermique et chimique.

Le procédé de synthèse d'une zéolithe du type MTT selon l'invention est caractérisé en ce qu'on réalise un mélange réactionnel renfermant de l'eau, une source de silicium tétravalent et de l'éthanol, et éventuellement une source d'ions hydroxydes, puis on rajoute le cas échéant une source d'aluminium trivalent, on maintient ce melange à une température supérieure à 80°C et sous une pression au moins égale à la pression autogène, pendant une durée suffisante pour effectuer la cristallisation du mélange réactionnel en précurseur de zéolithe, puis on transforme le précurseur en zéolithe par élimination de l'éthanol et de l'eau d'hydratation des cations.

Sans vouloir être limités par cette explication, nous pensons que c'est l'utilisation d'une quantité d'éthanol adéquate pour modifier la solubilité de la silice dans le mélange réactionnel qui rend la synthèse possible en fournissant un degré de sur-saturation particulièrement propice à cette structure.

Dans le tableau 2 nous précisons les rapports molaires de réactifs permettant la cristallisation d'une zéolithe du type MTT.

**TABLEAU 2**

| | Domaine large | Domaine préféré | Domaine particulièrement préféré |
|---|---|---|---|
| Al^{III}/SiO₂ | 0-0,1 | 0-0,08 | 0-0,05 |
| Na⁺/SiO₂ | 0-4 | 0,01-2 | 0,03-1 |
| EtOH/SiO₂ | 2-200 | 2-100 | 4-30 |
| OH⁻/SiO₂ | 0-2 | 0,01-1 | 0,03-0,5 |
| H₂O/SiO₂ | 5-200 | 5-150 | 5-50 |

Parmi les sources de silicium tétravalent utilisables dans la préparation du mélange réactionnel, on peut citer les silices solides finement divisées sous forme d'hydrogel, d'aérogels ou de suspensions colloïdales, les silicates hydrosolubles tels que les silicates alcalins comme le silicate de sodium, les esters siliciques hydrolysables tels que les orthosilicates de tétraalcoyle de formule Si(OR)₄) dans laquelle R désigne un alcoyle en C₁ à C₄ tel que méthyle et éthyle.

La source de silicium est mise en oeuvre sous la forme d'une solution aqueuse vraie, dans le cas des silicates hydrosolubles, ou bien d'une suspension aqueuse qui peut être colloïdale, dans le cas des silicates finement divisées.

Les traces d'aluminium présentes dans la source de silicium ne gênent pas la cristallisation. L'aluminium peut d'ailleurs être incorporé délibérément dans la synthèse sous la forme de sels d'aluminium tels que sulfate, nitrate, chlorure, fluorure, acétate, les oxydes et hydroxydes d'aluminium, les aluminates et notamment les aluminates alcalins tels que l'aluminate de sodium, les esters d'aluminium tels que les aluminium trialcoxydes de formule Al(OR)₃ dans laquelle R désigne un radical alcoyle en C₁ à C₄ tel que méthyle, éthyle ou propyle. Cependant, pour l'obtention de ces zeolithes contenant de l'aluminium trivalent, il est nécessaire que le rapport molaire EtOH:Al^{III} soit supérieur à 196.

La source d'ions hydroxydes est choisie parmi les bases fortes minérales, notamment hydroxydes des métaux alcalins du groupe IA de la Classification Périodique des éléments et hydroxydes des métaux alcalino-terreux et les bases fortes organiques, notamment hydroxydes d'ammonium quaternaires, la préférence allant aux bases minérales fortes notamment à la soude, NaOH.

Le mélange des ingrédients constituant le mélange réactionnel peut être réalisé dans un ordre quelconque.

Avantageusement on prépare d'abord une solution alcaline en dissolvant la base forte dans l'eau. La base forte est en général la soude en pastilles. A cette solution alcaline on ajoute l'éthanol puis la source de silicium. Ces deux opérations sont en général réalisées à température ambiante.

L'ensemble est transféré dans un autoclave muni d'un système d'agitation. Le mélange est chauffé sous pression autogène jusqu'à la cristallisation complète de la zéolithe. Le temps de réaction est généralement compris entre 15 et 150 heures. La température varie entre 80 et 200°C.

La durée de la synthèse peut être raccourcie en ajoutant au milieu réactionnel des germes de cristallisation. Les germes sont obtenus par le broyage d'une zéolithe de type MTT. En absence de germes, il est également avantageux de soumettre toute ou une partie du mélange réactionnel à un mûrissement à une température inférieure à la température de cristallisation.

Certaines des propriétés du solide final, comme la taille et la forme des cristaux peuvent être affectées par ces modifications mais la structure cristalline et les caractéristiques d'adsorption demeurent inchangées.

Les cristaux obtenus sont le précurseur de la zéolithe consistant en la zéolithe emprisonnant dans ses pores et cavités l'eau d'hydratation des cations et l'éthanol. Ces cristaux sont séparés du milieu de réaction par filtration, lavés à l'eau distillée ou désionisée, jusqu'à l'obtention d'eaux de lavage peu basiques.

Les cristaux lavés sont ensuite séchés à une température comprise entre 50 et 90°C, de préférence vers 70°C.

La composition stoechiométrique du précurseur de la zéolithe exprimée en moles d'oxydes est la suivante.
a 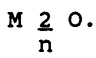 b Al₂O₃. SiO₂. c H₂O. d EtOH
où
- M est un métal alcalin du groupe IA de la Classification Périodique des éléments, ou un métal alcalino-terreux ou un ammonium quaternaire, de préférence le sodium :
- a va de 0 à 0,1
- b va de 0 à 0,1
- c va de 0 à 1
- d va de 0 à 1

Le diagramme de diffraction des rayons X du précurseur de la zéolithe MTT est décrit dans le tableau 3.

Le diffractogramme de rayons X a été obtenu par une méthode classique en utilisant la radiation K alpha du cuivre et un détecteur amplificateur. L'enregistrement des intensités des signaux est effectué en fonction de la position de ceux-ci exprimée en deux théta, où théta est l'angle de Bragg. Ces données conduisent aux intensités relatives et aux distances réticulaires, d(nm) en nanomètres qui sont caractéristiques de la structure cristalline. Les valeurs peuvent différer légèrement en fonction de la taille des cristaux et de leur état d'hydratation, mais en règle générale le diffractogramme de rayons X constitue une caractéristique de la structure concernée.

**TABLEAU 3**

| Diffractogramme de rayons X du précurseur de la zéolithe MTT. | |
|---|---|
| d(10⁻¹nm) | I/I max |
| 11,19 | 0,9 |
| 10,93 | 0,9 |
| 10,16 | 0,1 |
| 7,83 | 0,2 |
| 5,60 | 0,1 |
| 5,43 | 0,1 |
| 4,50 | 0,5 |
| 4,41 | 0,4 |
| 4,27 | 0,3 |
| 3,88 | 0,3 |
| 3,69 | 1,0 |
| 3,61 | 0,8 |
| 3,54 | 0,3 |
| 3,43 | 0,4 |
| 3,33 | 0,1 |
| 2,84 | 0,1 |
| 2,52 | 0,4 |
| 2,44 | 0,1 |
| 2,38 | 0,1 |

La zéolithe est obtenue à partie du précurseur par libération de ses cavités et canaux.

Dans le cas de zéolithes de type MTT synthétisées selon les méthodes de l'art antérieur, les cavités et canaux renferment des bases organiques azotées ou éventuellement de l'éthylène glycol. La porosité ne peut être libérée que par calcination, en dégradant thermiquement les molécules de structurant.

La porosité de zéolithe MTT préparée selon l'invention est libérée par des traitements à température modérée, suffisant pour provoquer le départ des molécules d'eau et d'éthanol. La porosité de la zéolithe est libérée par séchage à l'air à 70-120°C ou par lavage à l'eau à 60-90°C.

La zéolithe ainsi obtenue conserve sa cristallinité et ses capacités d'adsorption après traitement thermique et hydrothermique prolongés ou après traitement acide. Avant l'utilisation elle peut être soumise à un traitement visant à éliminer les traces de sodium éventuellement présentes.

Les zéolithes obtenues selon l'invention conviennent comme adsorbants organophiles, permettant la séparation de molécules organiques de l'eau.

Dans leur forme protonée ou après échange avec des cations elles peuvent être utilisées comme catalyseurs ou composants de catalyseurs pour les réactions de conversion catalytique de composés hydrocarbonés.

Les exemples suivants illustrent l'invention sans toutefois la limiter.

### EXEMPLE 1 :

Dans un autoclave en acier inoxydable de 500ml contant 30ml d'eau désionisée on dissout 0,7 grammes de soude (NaOH, Prolabo Normapur) en pastilles et on rajoute 216 grammes d'éthanol (SDS PPA). On ajoute ensuite 50 grammes de sol de silice à 40% en poids de silice (Ludox AS-40, Dupont de Nemours) sous forte agitation. Compte tenu de la présence de traces (0,02% poids) d'aluminium dans la source de silice la stoechiométrie du gel de cristallisation est la suivante :

0,08 Na₂O, 0,0005 Al₂O₃, SiO₂, 9,4 H₂O, 13,5 EtOH

On maintient l'agitation pendant une heure trente puis on ferme l'autoclave et on élève la température à 140°C en maintenant une agitation de 300 rpm (rotations par minute). Après 48 heures les cristaux de zéolithe sont récupérés par filtration, lavés à l'eau et séchés à l'étuve à 70°C sous air pendant 12 heures.
Le solide présente un diffractogramme des rayons X correspondant à celui du tableau 3. La quantité totale d'eau et d'éthanol piégée dans les pores après séchage à 70°C, mesurée par thermogravimétrie, est de 3% en poids. Exprimée en moles d'oxydes la composition de la zéolithe est la suivante :

0,05 Na₂O, 0,002 Al₂O₃, SiO₂, O,02 EtOH, 0,1 H₂O

Le poids de solide, séché à 70°C, recueilli dans cette synthèse est de 18,36 grammes ce qui correspond à un rendement par rapport à la silice engagée de 85%.
L'analyse thermogravimétrique de la zéolithe montre que la totalité de l'eau et de l'éthanol occlus dans les pores est éliminée après chauffage à 120°C.
L'analyse volumétrique par adsorption d'azote à 77 K conduit à une aire spécifique de 206 m²/g et un volume microporeux accessible de 0,08 ml/g.
Cette zéolithe adsorbe 0,8% poids d'eau (5 torr, 25°C), 5% poids de n-hexane (15 torr, 25°C) et 0,3% poids de cyclohexane (15 torr, 25°C). Ces données illustrent la sélectivité des zéolithes selon l'invention pour les molécules organiques apolaires de faible diamètre cinétique.

### EXEMPLE 2 :

Cet exemple illustre la stabilité thermique et chimique des zéolithes de type MTT selon l'invention.
Une synthèse de zéolithe selon l'invention a été réalisé dans un réacteur de deux litres en reproduisant les conditions opératoires et la stoechiométrie de l'exemple précédent et en multipliant les différentes quantités engagées par trois.
Le solide obtenu (49,5g de produit sec) présente un diffractogramme des rayons X caractéristique d'une zéolithe de type MTT. Son aire spécifique est de 230 m²/g et sa capacité d'adsorption du n-hexane est de 5,3% poids.
Dix grammes de cet échantillon sont traités à reflux pendant 2 heures dans une solution d'acide chlorhydrique 6 fois normale. A l'issue du traitement la zéolithe a conservé sa cristallinité (mesurée par diffraction des rayons X), sa surface spécifique est de 215 m²/g, sa capacité d'adsorption du n-hexane est de 5,5% poids et celle d'eau de 0,5%. Le traitement acide a donc encore amélioré la sélectivité de la zéolithe pour l'adsorption de l'hydrocarbure.
Une autre portion de la préparation précédente a été calcinée sous flux d'air (100 ml/mn) pendant 10 heures à 900°C. Cet échantillon est demeuré cristallin ; sa surface spécifique est de 200 m²/g et sa capacité d'adsorption est de 4,8% poids de n-hexane et 0,5% poids d'eau.

### EXEMPLES 3-5 :

Exemples dans lesquels les conditions opératoires et la stoechiométrique des gels de cristallisation ont été modifiées pour la préparation de zéolithes de type MTT selon l'invention. Dans les exemples 3 et 4 la source de silicium utilisée est une silice solide microporeuse. Dans l'exemple 5 la teneur en aluminium dans le gel de cristallisation a été augmentée en rajoutant de l'aluminate de sodium.

| Ex. | Al/SiO₂ | EtOH/SiO₂ | Na/SiO₂ | H₂O/SiO₂ | T(°C) | t(h) |
|---|---|---|---|---|---|---|
| 3 | 0,022 | 8,3 | 0,57 | 17 | 160 | 48 |
| 4 | 0,022 | 6,1 | 0,08 | 9 | 150 | 44 |
| 5 | 0,045 | 8,8 | 0,6 | 19 | 160 | 46 |

Dans les trois synthèses ci-dessus les zéolithes obtenues présentent le diffractogramme de rayons X caractéristique de la structure de type MTT.

## Revendications

1. Procédé de synthèse d'une zéolithe de type MTT caractérisé en ce que :
**i)** on réalise un mélange réactionnel renfermant de l'eau, une source de silicium tétravalant, de l'éthanol et éventuellement une source d'ions hydroxydes tel que les rapports molaires varient de 2 à 200 pour EtOH:Si02, de 5 à 200 pour H₂O:SiO₂ et de 0 à 2 pour OH⁻:SiO₂
**ii)** on ajoute éventuellement une source d'aluminium trivalent dans une quantité telle que le rapport molaire Al^{III}:SiO₂ est inférieur ou égal à 0,1 et le rapport molaire EtOH/Al^{III} est un nombre supérieur à 196.
**iii)** on maintient ce mélange à une température supérieure à 80°C et sous une pression au moins égale à la pression autogène pendant un durée suffisante pour effectuer la cristallisation du mélange réactionnel en précurseur de zéolithe,
**iiii)** et on transforme le précurseur en zéolithe par élimination de l'éthanol et de l'eau d'hydratation de cations.

2. Procédé selon la revendication 1 caractérisé en ce que le rapport molaire des réactifs dans le mélange réactionnel est tel que Al^{III}:SiO₂ = 0 à 0,08, EtOH:SiO₂ = 2 à 100, OH⁻:SiO₂ = 0,01 à 1, H₂O:SiO₂ = 5 à 150.

3. Procédé selon la revendication 2 caractérisé en ce que le rapport molaire des réactifs dans le mélange réactionnel est tel que Al^{III}:SiO₂ = 0 à 0,05, EtOH:SiO₂ = 4 à 30, OH-SiO₂ = 0,03 à 0,5, H₂O:SiO₂ = 5 à 50.

4. Procédé selon l'une des revendications 1 à 3 caractérisé en ce que la source de silicium tétravalent est choisi dans le groupe constitué par les silices solides finement divisés sous forme d'hydrogel, d'aérogels ou de suspensions colloïdales, les silicates hydrosolubles tels que les silicates alcalins, comme le silicate de sodium, les esters siliciques hydrolysables tels que les orthosilicates de tétraalcoyle de formule Si(OR)₄ dans laquelle R désigne un alcoyle en C₁ à C₄.

5. Procédé selon la revendication 1 caractérisé en ce que la source d'aluminium trivalent est choisi dans le groupe constitué par les sels d'aluminium, tels que sulfate, nitrate, chlorure, fluorure, acétate, les oxydes et hydroxydes d'aluminium, les aluminates et notamment les aluminates alcalins tels que l'aluminate de sodium, les esters d'aluminium tels que les aluminium trialcoxydes de formule Al(OR)₃ dans laquelle R désigne un radical alcoyle en C₁ à C₄.

6. Procédé selon la revendication 1 caractérisé en ce que la source d'ions hydroxydes est choisi dans le groupe constitué par les bases fortes minérales, notamment hydroxydes des métaux alcalins du groupe IA de la Classification Périodique des éléments et les hydroxydes des métaux alcalino-terreux et les bases fortes organiques notamment hydroxydes d'ammonium quaternaire.

7. Procédé selon la revendication 6 caractérisé en ce que la source d'ions hydroxydes est une base minérale forte et de préférence la soude, NaOH tel que Na⁺:SiO₂ = 0,005 à 4.

8. Procédé selon l'une des revendications 1 à 7 caractérisé en ce qu'on ajoute à une solution alcaline préparée par dissolution d'une base forte dans l'eau, de l'éthanol, la source de silicium^{IV} et éventuellement la source d'aluminium^{III}, puis on chauffe ce mélange réactionnel sous pression autogène jusqu'à cristallisation complète de la zéolithe.

9. Procédé selon la revendication 8 caractérisé en ce qu'on chauffe le mélange réactionnel à une température comprise entre 80 et 200°C.

10. Procédé selon la revendication 8 ou 9 caractérisé en ce que la durée de la réaction est comprise entre 15 et 150 heures.

11. Précurseurs de zéolithes de type structural MTT, caractérisé en ce que sa composition exprimée en moles d'oxydes correspond à
a 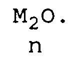 b Al₂O₃. SiO₂. c H₂O. d EtOH
où
- M est choisi dans le groupe formé par les métaux alcalins du groupe IA de la Classification Périodique des éléments, les métaux alcalino-terreux et les ammoniums quaternaires et
- a va de 0 à 0,1
- b va de 0 à 0,1
- c va de 0 à 1
- d va de 0 à 1
et en ce que son diagramme de diffraction des rayons X est décrit dans le tableau 3.

12. Application des précurseurs selon la revendication 11 à la production des zéolithes par séchage à l'air à 70-120°C ou par lavage à l'eau à 60-90°C, les zéolithes étant utilisables comme adsorbants organophiles ou comme catalyseurs ou composants de catalyseurs pour les réactions de conversion catalytique des composés hydrocarbonés.

## Claims

1. Process for the synthesis of a zeolite of the MTT type, characterised in that:
i) a reaction mixture containing water, a source of tetravalent silicon, ethanol and optionally a source of hydroxide ions is formed in such a manner that the molar ratios vary from 2 to 200 in the case of EtOH:SiO₂, from 5 to 200 in the case of H₂O:SiO₂ and from 0 to 2 in the case of OH⁻:SiO₂
ii) optionally, a source of trivalent aluminium is added in an amount such that the molar ratio Al^{III}:SiO₂ is less than or equal to 0.1 and the molar ratio EtOH/Al^{III} is a number greater than 196
iii) the mixture is maintained at a temperature higher than 80°C and under a pressure at least equal to the autogenous pressure for a period sufficient to effect the crystallisation of the reaction mixture to form a zeolite precursor
iv) and the precursor is converted into the zeolite by eliminating the ethanol and the cation hydration water.

2. Process according to Claim 1, characterised in that the molar ratio of the reagents in the reaction mixture is such that Al^{III}:SiO₂ = 0 to 0.08, EtOH:SiO₂ = 2 to 100, OH⁻:SiO₂ = 0.01 to 1, H₂O:SiO₂ = 5 to 150.

3. Process according to Claim 2, characterised in that the molar ratio of the reagents in the reaction mixture is such that Al^{III}:SiO₂ = 0 to 0.05, EtOH:SiO₂ = 4 to 30, OH⁻:SiO₂ = 0.03 to 0.5, H₂O:SiO₂ = 5 to 50.

4. Process according to any one of Claims 1 to 3, characterised in that the source of tetravalent silicon is selected from the group consisting of the finely divided solid silicas in the form of hydrogels, aerogels or colloidal suspensions, hydrosoluble silicates, such as alkali silicates, such as sodium silicate, hydrolysable silicic acid esters, such as tetraalkyl orthosilicates of the formula Si(OR)₄ in which R represents a C₁-C₄ alkyl.

5. Process according to Claim 1, characterised in that the source of trivalent aluminium is selected from the group consisting of aluminium salts, such as sulphate, nitrate, chloride, fluoride and acetate, aluminium oxides and hydroxides, aluminates and especially alkali aluminates, such as sodium aluminate, aluminium esters, such as aluminium trialkoxides of the formula Al(OR)₃ in which R represents a C₁-C₄ alkyl radical.

6. Process according to Claim 1, characterised in that the source of hydroxide ions is selected from the group consisting of strong mineral bases, especially hydroxides of the alkali metals of group IA of the Periodic Table of Elements and alkaline earth metal hydroxides, and strong organic bases, especially quaternary ammonium hydroxides.

7. Process according to Claim 6, characterised in that the source of hydroxide ions is a strong mineral base and preferably soda, NaOH, such that Na⁺:SiO₂ = 0.005 to 4.

8. Process according to any one of Claims 1 to 7, characterised in that ethanol, the source of silicon^{IV} and, optionally, the source of aluminium^{III} are added to an alkaline solution prepared by dissolving a strong base in water, and then the reaction mixture is heated under autogenous pressure until the zeolite has crystallised completely.

9. Process according to Claim 8, characterised in that the reaction mixture is heated to a temperature of between 80 and 200°C.

10. Process according to Claim 8 or 9, characterised in that the duration of the reaction is between 15 and 150 hours.

11. Zeolite precursors of the MTT structural type, characterised in that its composition expressed in moles of oxide corresponds to
a 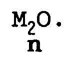 b Al₂O₃. SiO₂. c H₂O. d EtOH
**wherein**
- **M** is selected from the group consisting of the alkali metals of group IA of the Periodic Table of Elements, the alkaline earth metals and the quaternary ammoniums and
- a is from 0 to 0.1
- b is from 0 to 0.1
- c is from 0 to 1
- d is from 0 to 1
and in that its X-ray diffraction pattern is described in Table 3.

12. Application of the precursors according to Claim 11 to the production of zeolites by drying in air at 70-120°C or by washing in water at 60-90°C, it being possible to use the zeolites as organophilic adsorbents or as catalysts or components of catalysts for reactions for the catalytic conversion of hydrocarbon compounds.

## Patentansprüche

1. Verfahren zur Synthese eines Zeoliths vom MTT-Typ, dadurch gekennzeichnet, daß man
a) ein Reaktionsgemisch aus Wasser, einer Quelle für vierwertiges Silizium, Ethanol und gegebenenfalls einer Hydroxidionenquelle herstellt, wobei die Molverhältnisse für EtOH:SiO₂ zwischen 2 und 200, für H₂O:SiO₂ zwischen 5 und 200 und für OH⁻:SiO₂ zwischen 0 und 2 liegen,
b) gegebenenfalls eine Quelle für dreiwertiges Aluminium in einer solchen Menge zusetzt, daß das Molverhältnis Al^{III}:SiO₂ weniger als 0,1 beträgt oder diesem Wert entspricht und das Molverhältnis EtOH:Al^{III} eine Zahl von über 196 ist,
c) das Gemisch bei einer Temperatur von über 80° C und unter einem Druck, der mindestens dem Eigendruck entspricht, während einer Dauer, die ausreicht, um das Reaktionsgemisch zu einer Zeolithprecursorverbindung auskristallisieren zu lassen, hält und
d) die Precursorverbindung durch Abtrennen des Ethanols und des Kationenhydratwassers in einen Zeolith überführt.

2. Verfahren nach Anspruch 1, dadurch gekennzeichnet, daß die Molverhältnisse der im Reaktionsgemisch vorliegenden Reaktionsteilnehmer Al^{III}:SiO₂=0-0,08, EtOH:SiO₂= 2-100, OH⁻:SiO₂=0,01-1 und H₂O:SiO₂=5-150 betragen.

3. Verfahren nach Anspruch 2, dadurch gekennzeichnet, daß die Molverhältnisse der im Reaktionsgemisch vorliegenden Reaktionsteilnehmer Al^{III}:SiO₂=0-0,05, EtOH:SiO₂=4-30, OH⁻:SiO₂=0,03-0,5 und H₂O:SiO₂=5-50 betragen.

4. Verfahren nach einem der Ansprüche 1 bis 3, dadurch gekennzeichnet, daß die Quelle für vierwertiges Silizium ausgewählt ist aus der Gruppe, bestehend aus festen, feinverteilten Kieselerden in Form von Hydrogel, Aerogelen oder von Kolloidsuspensionen, wasserlöslichen Silikaten wie Alkalisilikaten, wie z.B. Natriumsilikat, hydrolisierbaren Kieselsäureestern wie Tetraalkyl-ortho-Silikaten der Formel Si(OR)₄, worin R ein C₁₋₄-Alkyl bedeutet.

5. Verfahren nach Anspruch 1, dadurch gekennzeichnet, daß die Quelle für dreiwertiges Aluminium ausgewählt ist aus der Gruppe, bestehend aus Aluminiumsalzen wie Aluminiumsulfat, -nitrat, -chlorid, -fluorid und -acetat, Aluminiumoxiden und -hydroxiden, Aluminaten und insbesondere Alkalialuminaten wie Natriumaluminat und Aluminiumestern wie Aluminiumtrialkoxiden der Formel Al(OR)₃, worin R einen C₁₋₄-Alkylrest bedeutet.

6. Verfahren nach Anspruch 1, dadurch gekennzeichnet, daß die Hydroxidionenquelle ausgewählt ist aus der Gruppe, bestehend aus starken anorganischen Basen, insbesondere Hydroxiden von Alkalimetallen der Gruppe IA des Periodensystems der Elemente und Hydroxiden von Erdalkalimetallen sowie starken organischen Basen, insbesondere von Hydroxiden des quaternären Ammonium.

7. Verfähren nach Anspruch 6, dadurch gekennzeichnet, daß die Hydroxidionenquelle eine starke anorganische Base, vorzugsweise Natronlauge (NaOH), wobei Na⁺:SiO₂= 0,005-4 ist, darstellt.

8. Verfahren nach einem der Ansprüche 1 bis 7, dadurch gekennzeichnet, daß man einer durch Lösen einer starken Base in Wasser erhaltenen Alkalilösung Ethanol, die Silizium^{IV}-Quelle und gegebenenfalls die Aluminium^{III}-Quelle zusetzt, wonach man das Reaktionsgemisch unter Eigendruck bis zur vollständigen Kristallisierung des Zeoliths erhitzt.

9. Verfahren nach Anspruch 8, dadurch gekennzeichnet, daß man das Reaktionsgemisch auf eine Temperatur zwischen 80 und 200°C erhitzt.

10. Verfahren nach einem der Ansprüche 8 oder 9, dadurch gekennzeichnet, daß die Reaktionsdauer 15 bis 150 h beträgt.

11. Zeolithprecursorverbindungen vom MTT-Strukturtyp, dadurch gekennzeichnet, daß ihre Zusammensetzung, ausgedrückt in mol Oxiden,
a 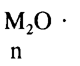 b Al₂O₃ · Si O₂ · c H₂O · d EtOH
entspricht, worin
- M ausgewählt ist aus der Gruppe, bestehend aus den Alkalimetallen der Gruppe IA des Periodensystems der Elemente, den Erdalkalimetallen und quarternärem Ammonium, und
- a=0-0,1
- b=0-0,1
- c=0-1
- d=0-1
und daß ihr Röntgenbeugungsdiagramm dem in Tabelle 3 beschriebenen entspricht.

12. Verwendung der Precursorverbindungen nach Anspruch 11 zur Herstellung von Zeolithen durch Lufttrocknung bei 70-120°C oder durch Waschen mit Wasser bei 60-90°C, wobei die Zeolithe als organophile Adsorbentien oder als Katalysatoren oder als Katalysatorkomponenten für katalytische Umsetzungen von Kohlenwasserstoffverbindungen verwendet werden können.
